# EUROPÄISCHE PATENTSCHRIFT

(11) **EP 1 147 327 B1**
(45) Veröffentlichungstag und Bekanntmachung des Hinweises auf die Patenterteilung: **16.06.2004**
(21) Anmeldenummer: 00904901.6
(22) Anmeldetag: 12.01.2000
(51) Int. Cl.: F16D 65/14

(54) **VERRIEGELUNGSVORRICHTUNG FÜR EINE ELEKTROMECHANISCH BETÄTIGBARE RADBREMSE**
LOCKING DEVICE FOR AN ELECTROMECHANICALLY ACTUATED WHEEL BRAKE
DISPOSITIF DE VERROUILLAGE POUR UN FREIN SUR ROUE POUVANT ETRE ACTIONNE ELECTROMECANIQUEMENT

(30) Priorität: 13.01.1999 DE 19900897
(43) Veröffentlichungstag der Anmeldung: 24.10.2001
(73) Patentinhaber: Continental Teves AG & Co. oHG, 60488 Frankfurt (DE)
(72) Erfinder: HOFFMANN, Oliver, D-60486 Frankfurt am Main (DE); JUNGBECKER, Johann, D-55576 Badenheim (DE)
(86) Internationale Anmeldenummer: PCT/EP2000/000169
(87) Internationale Veröffentlichungsnummer: WO 2000/042333

(56) Entgegenhaltungen:
- EP-A- 0 916 866
- DE-A- 19 620 344
- US-A- 4 542 809
- US-A- 5 785 157

## Beschreibung

Die Erfindung betrifft eine Verriegelungsvorrichtung für eine elektromechanisch betätigbare Radbremse eines Kraftfahrzeuges, die mittels der Verriegelungsvorrichtung in einem zugespannten Zustand arretierbar ist, mit einer elektrisch ansteuerbaren Schalteinrichtung sowie einer Sperrklinke, die durch zumindest eine elektrische Spule mit einem elektromagnetisch wirksamen Spulenkern elektromagnetisch an die Schalteinrichtung gekoppelt ist und mit zumindest einem Element zur Übertragung der Betätigungskraft der Radbremse zusammenwirkt. Dabei ist es mittels der Verriegelungsvorrichtung möglich, die Radbremse im zugespannten Zustand zu arretieren.

Eine als kombinierte Betriebs- und Feststellbremse ausgeführte Radbremse für Kraftfahrzeuge wird beispielsweise in der DE 196 20 344 A1 beschrieben. Die dort offenbarte Bremsanlage besitzt hydraulisch zuspannbare, kombinierte Betriebs- und Feststellbremsen, die jeweils über eine mechanische Verriegelungsvorrichtung verfügen. Die Verriegelungsvorrichtung ist elektrisch betätigbar und ferner in der Lage, die Bremse im zugespannten Zustand entgegen der Zuspannrichtung mechanisch zu arretieren. Gelöst wird die festgestellte Bremse durch erneuten Aufbau des Zuspanndruckes sowie elektrische Deaktivierung der Verriegelungsvorrichtung. Dabei ist es je nach Ausführung der konkreten Verriegelungsvorrichtung erforderlich, entweder zur elektrischen Aktivierung oder aber zur Deaktivierung der Verriegelungsvorrichtung einen stetigen Stromfluß ausgehend von einer Energiequelle zur Verriegelungsvorrichtung zu gewährleisten. Für die praktische Umsetzung einer derartigen kombinierten Betriebs- und Feststellbremse ist ein solcher stetiger Stromfluß zur Verriegelungsvorrichtung einerseits energetisch ungünstig und andererseits bei Ausfall der entsprechenden Energiequelle nicht hinreichend funktionssicher.

Aus der US 5 785 157 A ist eine Verriegelungsvorrichtung für eine elektromechanisch betätigbare Radbremse eines Kraftfahrzeuges bekannt. Die Verriegelungsvorrichtung kann die Radbremse im zugespannten Zustand verriegeln, indem eine von einem Elektromagneten betätigbare Sperrklinke mit einem Rotor eines Elektromotors der Zuspannvorrichtung zusammenwirkt. Bei der vorbekannten Verriegelungsvorrichtung ist der verhältnismäßig große Bauraum als nachteilig anzusehen, da elektromechanische Zuspanneinrichtungen meist in der topfförmigen Ausnehmung der Felge von Kraftzeugrädern untergebracht werden.

Es ist daher die Aufgabe der Erfindung, eine Verriegelungsvorrichtung für eine elektromechanisch betätigbare Radbremse, insbesondere eines Kraftfahrzeuges, anzugeben, die hinsichtlich ihres Gesamtaufbaus vereinfacht und platzsparend ist sowie bei Ausfall des elektrischen Bordnetzes die Verriegelung der Radbremse sicher gewährleistet.

Gelöst wird die Aufgabe dadurch, dass die Schalteinrichtung zumindest einen Permanentmagneten aufweist, der mit der Sperrklinke zusammenwirkt, wobei die elektrische Spule derart in der Nähe des Permanentmagneten angeordnet ist, so dass je nach Bestromung der Spule das Magnetfeld des Permanentmagneten gestärkt bzw. geschwächt wird. Die Verriegelungsvorrichtung für die elektromechanisch betätigbare Radbremse umfasst eine elektrisch ansteuerbare Schalteinrichtung sowie eine Sperrklinke, die an die Schalteinrichtung gekoppelt ist. Dabei ist die Sperrklinke zum Eingriff in ein Element zur Übertragung der Betätigungskraft der Radbremse vorgesehen. Beispielsweise kann ein solches Element als Zahnrad einer elektromotorisch betätigbaren Radbremse ausgeführt sein. Mittels der Sperrklinke kann somit die Radbremse im zugespannten Zustand arretiert werden. Die Sperrklinke ist dabei an die Schalteinrichtung elektromagnetisch gekoppelt wodurch die Sperrklinke im stromlosen Zustand in den Positionen 'Verriegelungsvorrichtung aktiviert', d. h. Sperrklinke im Eingriff, und 'Verriegelungsvorrichtung deaktiviert', d. h. Sperrklinke außer Eingriff, fixiert ist. Durch elektrische Signale beispielsweise in Form von Stromimpulsen kann die Sperrklinke mittels der Schalteinrichtung zwischen den genannten Positionen geschaltet werden.

Die Schalteinrichtung der Verriegelungsvorrichtung umfasst zumindest eine elektrische Spule mit einem elektromagnetisch wirksamen Spulenkern, der mit der Sperrklinke zusammenwirkt. Durch Bestromen der Spule kann mittels des Spulenkernes eine elektromagnetische Kraft auf die Sperrklinke ausgeübt werden, die diese in ihrer Schaltposition verändert.

Zur Fixierung der Schaltposition der Sperrklinke ist zumindest ein Permanentmagnet vorgesehen, der entweder in den Spulenkern oder aber in die Sperrklinke integriert ist. Durch die Magnetkraft des Permanentmagneten wird die Sperrklinke im unbestromten Zustand der Spule in einer definierten Endlage bzw. Schaltposition (Sperrklinke im/außer Eingriff) gehalten.

Gemäß der Erfindung ist die elektrische Spule derart in der Nähe des Permanentmagneten angeordnet, dass je nach Bestromungsrichtung der Spule das Magnetfeld des Permanentmagneten gestärkt bzw. geschwächt wird.

In einer vorteilhaften Ausführungsform der Verriegelungsvorrichtung weist die Schalteinrichtung zumindest zwei Schaltpositionen auf, wobei die Schalteinrichtung mittels elektrischer Signale in ihrer jeweiligen Schaltposition veränderbar ist und im stromlosen Zustand in der jeweiligen Schaltposition fixiert ist.

Auf diesem Wege ist eine elektrische Feststellbremse umsetzbar, wobei die Radbremse im zugespannten Zustand mit der Verriegelungsvorrichtung arretiert wird. Die eigentliche Zuspannung der Radbremse, insbesondere im Falle einer Feststellbremsung, kann je nach Ausführung der Radbremse grundsätzlich auf hydraulischem, elektromechanischem, mechanischem oder pneumatischem Wege erfolgen. Damit lässt sich der erfinderische Grundgedanke auf nahezu jede bekannte Bremsanlage übertragen. Eine besonders vorteilhafte Anwendung der Verriegelungsvorrichtung ergibt sich allerdings innerhalb einer elektromechanisch betätigbaren Radbremse.

Die Spule ist vorzugsweise über ein magnetisch wirksames Element, beispielsweise über den Spulenkern, an den Permanetmagneten elektromagnetisch gekoppelt. Durch die Veränderung des resultierenden Magnetfeldes innerhalb der Schalteinrichtung wird die auf die Sperrklinke einwirkende Magnetkraft beeinflußt. Somit wird eine gezielt steuerbare Schaltkraft auf die Sperrklinke ausgeübt.

In einer vorteilhaften Ausgestaltungsform besitzt die Schalteinrichtung eine mechanische Rastvorrichtung, die in der Lage ist, die Sperrklinke bei unbestromter Spule im jeweiligen Schaltzustand zu halten. Besonders einfach kann die Rastvorrichtung ein Federelement enthalten, das auf die Sperrklinke eine Federkraft ausübt. Mittels des Federlementes wird die Sperrklinke in einer definierten Endlage gehalten und kann entgegen der Federvorspannung bei Bestromung der Spule geschaltet werden.

Als besonders einfach aufgebaute Ausführung einer Schalteinrichtung erweist sich eine Variante mit einer Spule inklusive Spulenkern, mit einem Permanentmagneten und mit einer Rastvorrichtung, die ein Federelement aufweist. Dabei wird die Sperrklinke durch die Rastvorrichtung mit Federelement in einer Endlage gehalten (Sperrklinke im/außer Eingriff). Bei Bestromung der Spule wird das Magnetfeld des Permanentmagneten überlagert, wobei der Permanentmagnet in den Spulenkern integriert ist und somit magnetisch an die Spule gekoppelt ist. Die bestromte Spule vermag somit die Sperrklinke entgegen der Federvorspannung zu schalten.

Weitere Merkmale des Erfindungsgedankens werden anhand von Ausführungsbeispielen innerhalb der Zeichnung dargestellt und im folgenden näher erläutert.

Es zeigen:

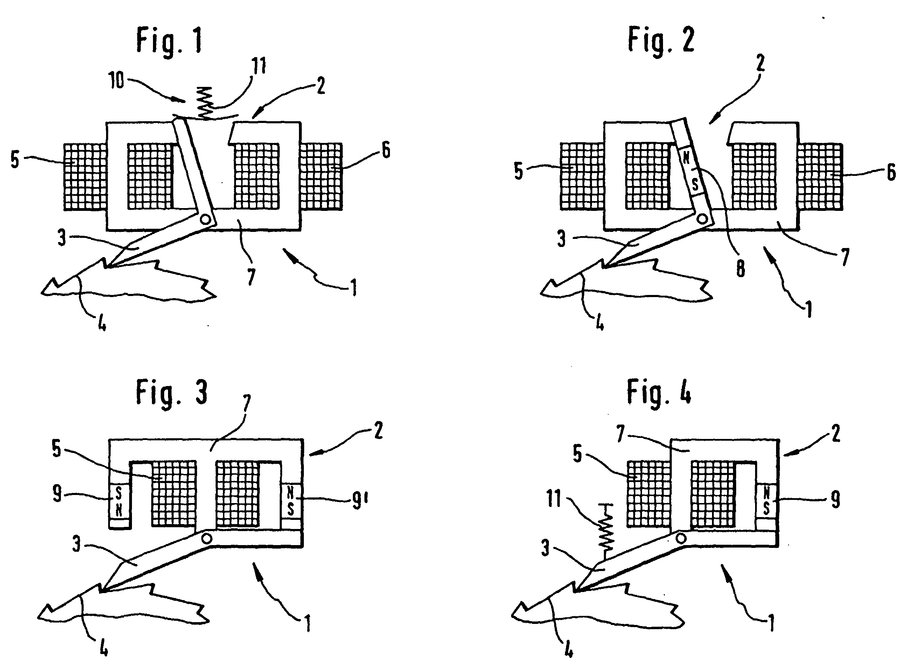

- Fig. 1-4: geschnittene Teilansichten mehrerer alternativer Ausführungsformen einer Verriegelungsvorrichtung für eine elektromechanisch betätigte Radbremse,

Die in den Figuren 1-4 dargestellten alternativ anwendbaren Varianten einer Verriegelungsvorrichtung 1 sind zur Arretierung einer insbesondere elektromechanisch betätigbaren Radbremse geeignet. Dazu verfügt die Verriegelungsvorrichtung 1 über eine Sperrklinke 3, die mit einem Element 4 zur Übertragung der Betätigungs- ober Zuspannkraft der nicht gezeigten Radbremse zusammenwirkt. Das Element 4 zur Betätigungskraftübertragung ist besonders vorteilhaft als Zahnrad oder sonstiges geignetes Bauteil ausgebildet, in das die Sperrklinke 3 gut eingreifen kann. Beispielsweise kann das Element auch als Getriebebauteil einer elektromechanisch oder elektromotorisch betätigten Radbremse ausgeführt sein. Allgemein wird bei Eingriff der Sperrklinke 3 in das Element 4 die Radbremse in ihrem aktuellen Betätigungszustand gehalten. Insbesondere bei zugespannter Radbremse ergibt sich durch die Verriegelungsvorrichtung 1 die Möglichkeit der einfachen Umsetzung einer elektrisch betätigbaren Feststellbremsfunktion. Dazu wird die Verriegelungsvorrichtung 1 bei zugespannter Radbremse aktiviert, indem die Sperrklinke 3 in Eingriff mit dem Kraftübertragungselement 4 gebracht wird. Die zugespannte Radbremse ist damit arretiert. Zum Lösen der Radbremse wird die Verriegelungsvorrichtung 1 deaktiviert, indem die Sperrklinke 3 außer Eingriff mit dem Element 4 gebracht wird.

Gesteuert wird die Sperrklinke 3 über eine elektrisch ansteuerbare Schalteinrichtung 2, an die die Sperrklinke 3 elektromagnetisch gekoppelt ist. Die Schalteinrichtung umfaßt zumindest eine elektrische Spule 5, 6 mit einem elektromagnetisch wirksamen Spulenkern 7, wobei die Spule 5, 6 unter Stromzufuhr eine elektromagnetische Kraft auf die Sperrklinke 3 ausübt. Dabei kann die Stromzufuhr zur Spule 5, 6 grundsätzlich statisch oder aber insbesondere in Form von Stromimpulsen erfolgen.

In der Ausführung nach Figur 1 besitzt die Schalteinrichtung 2 zwei Spulen 5, 6 mit einem Spulenkern 7, wobei die Sperrklinke 3 schwenkbar am Spulenkern 7 gelagert ist. Dabei ist die Sperrklinke 3 zwischen den Endlagen 'Sperrklinke im Eingriff' und 'Sperrklinke außer Eingriff' schwenkbar. Zur Änderung der Lage der Sperrklinke 3 wird jeweils eine der Spulen 5, 6 bestromt. Die bestromten Spulen 5, 6 verursachen eine elektromagnetische Krafteinwirkung auf die Sperrklinke 3, die die Schaltposition der Sperrklinke 3 verändert. Zur Sicherung der Endlage der Sperrklinke 3 ist eine Rastvorrichtung 10 vorgesehen, die insbesondere eine Feder 11 umfaßt. Damit bleibt der Zustand der Verriegelungsvorrichtung 1 bzw. der Betätigungszustand der Radbremse erhalten, auch wenn kein Strom fließt.

In Figur 2 ist eine der Ausführung nach Fig. 1 ähnliche Variante der Verriegelungsvorrichtung 1 dargestellt. Im Unterschied dazu ist statt der Rastvorrichtung ein in die Sperrklinke 3 integrierter Permanentmagnet 8 vorgesehen, der die Feststellung der Schaltposition der Sperrklinke 3 übernimmt. In beiden Schaltpositionen 'Sperrklinke in bzw. außer Eingriff' erhält der Permanentmagnet 8 auch im unbestromten Zustand der Spulen 5, 6 einen magnetischen Fluß durch den Spulenkern 7 aufrecht. Somit wird die Sperrklinke 3 in beiden Schaltpositionen stromlos arretiert.

Fig. 3 zeigt eine Ausführung der Schalteinrichtung 2 mit einem E-förmigen Spulenkern 7an dessen mittlerem Arm eine Spule 5 angeordnet ist. Die beiden außenliegenden Arme des Spulenkernes 7 sind jeweils mit einem Permanentmagneten 9, 9' versehen. Zur Änderung der Schaltposition der Sperrklinke 3 wird die Spule 5 in entgegengesetzten Richtung bestromt, so daß der magnetische Fluß des einen Permanentmagneten 9 gestärkt und der des anderem geschwächt wird. Am Arm des Spulenkernes 7 mit größerem magnetischen Fluß wirkt eine Magnetkraft auf die Sperrklinke 3, die gleichzeitig ein Joch für den Spulenkern 7 darstellt. Je nach Bestromungsrichtung der Spule 5 kann die Sperrklinke 3 somit in die gewünschte Schaltposition gebracht werden. Mittels der Permanentmagneten 9, 9' wird die Sperrklinke 3 stromlos im jeweiligen Schaltzustand gehalten.

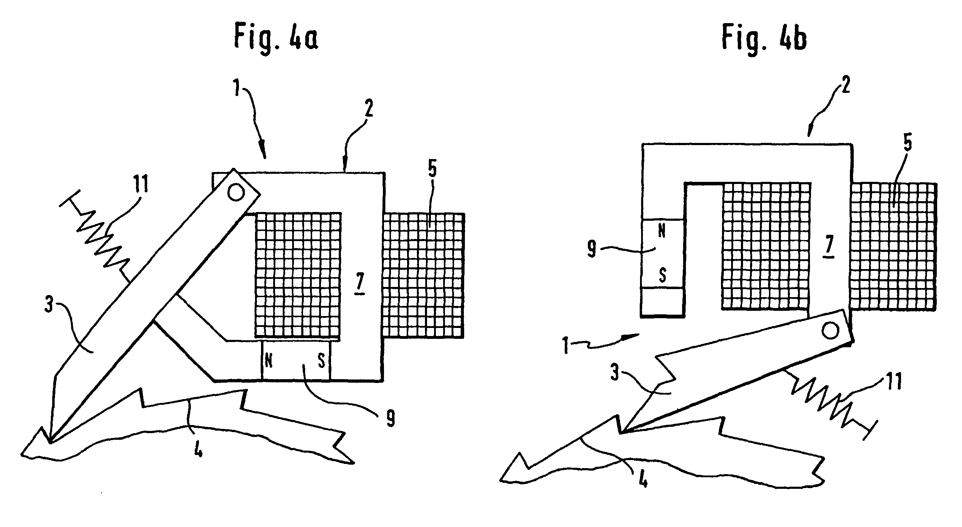

Figur 4 zeigt eine besonders kompakte Ausführung einer Verriegelungsvorrichtung 1 mit sowohl einer mechanischen als auch einer magnetischen Arretierung der Sperrklinke 3 im stromlosen Zustand. Die Schalteinrichtung 2 enthält einen im wesentlichen U-förmigen Spulenkern 7 auf dessem ersten Schenkel die Spule 5 angeordnet ist und dessen zweiter Schenkel den Permanentmagneten 9 aufweist. Die Sperrklinke 3 ist am ersten Schenkel des Spulenkernes 7 schwenkbar gelagert und ist weiterhin mit einer Zugfeder 11 verbunden. Dabei übt die Zugfeder 11 eine Federkraft auf die Sperrklinke 3 aus, die versucht die Sperrklinke 3 außer Eingriff mit dem Zahnrad 4 hält. Befindet sich die Sperrklinke 3 außer Eingriff mit dem Zahnrad 4, so wird die Spule 5 derart bestromt, daß das magnetische Feld des Permanentmagneten 9 mit dem der Spule 5 überlagert wird. Das resultierende Magnetfeld bewirkt eine Kraft auf die Sperrklinke 3, die die Sperrklinke 3 entgegen der Federkraft in Eingriff mit dem Zahnrad bringt. Der Permanentmagnet sorgt dafür, daß die Sperrklinke in dieser Schaltposition gehalten wird. Zum Lösen der Verriegelung wird die Spule 5 in entgegengesetzter Richtung bestromt. Dadurch wird das Magnetfeld des Permanentmagneten 9 geschwächt, so daß die Zugkraft der Feder 11 überwiegt und die Sperrklinke 3 aus dem Eingriff im Zahnrad löst. Diese zweite Schaltposition der Sperrklinke 3 wird durch die Kraft der Zugfeder 11 im stromlosen Zustand beibehalten.

Eine Variation dieses prinzipiellen Aufbaus der Schalteinrichtung 2 ist in den Figuren 4a, 4b zu finden. In der Ausführung gemäß Fig. 4a wird die Sperrklinke 3 ebenfalls von der Kraft einer Zugfeder 11 beaufschlagt, die unter Bestromung einer resultierenden Magnetkraft eines Permanentmagneten 9 sowie einer elektrischen Spule 5 entgegenwirkt. Dabei wird die Sperrklinke 3 mittels der Magnetkraft in Eingriff mit dem in Verbindung mit der Radbremse stehenden Zahnrad gebracht. Im Unterschied zur Ausführung nach Fig. 4 sind der Spulenkern 7 und die Sperrklinke 3 geringfügig umgestaltet, um eine besonders kleinbauende Schalteinrichtung 2 zu erreichen.

Figur 4b zeigt ein analoges Funktionsprinzip der Schalteinrichtung 2, wobei die Sperrklinke 3 durch die Kraft der Zugfeder 11 an das Zahnrad zu Übertragung der Betätigungskraft der Radbremse angepreßt wird. Erst unter Bestromung der Spule 5 läßt sich die Sperrklinke 3 aus dem Eingriff in das Zahnrad 4 lösen. Diese Anordnung hat den Vorteil, daß radiale Toleranzen zwischen dem Permanentmagneten 9 und dem Zahnrad 4 besser kompensiert werden können.

## Patentansprüche

1. Verriegelungsvorrichtung für eine elektromechanisch betätigbare Radbremse eines Kraftfahrzeuges, die mittels der Verriegelungsvorrichtung in einem zugespannten Zustand arretierbar ist, mit einer elektrisch ansteuerbaren Schalteinrichtung (2) sowie einer Sperrklinke (3), die durch zumindest eine elektrische Spule (5, 6) mit einem elektromagnetisch wirksamen Spulenkern (7) elektromagnetisch an die Schalteinrichtung (2) gekoppelt ist und mit zumindest einem Element (4) zur Übertragung der Betätigungskraft der Radbremse zusammenwirkt, **dadurch gekennzeichnet, dass** die Schalteinrichtung (2) zumindest einen Permanentmagneten (8, 9) aufweist, der mit der Sperrklinke (3) zusammenwirkt, wobei die elektrische Spule (5, 6) derart in der Nähe des Permanentmagneten (8, 9) angeordnet ist, so dass je nach Bestromung der Spule (5, 6) das Magnetfeld des Permanentmagneten (8, 9) gestärkt bzw. geschwächt wird.

2. Verriegelungsvorrichtung nach Anspruch 1, **dadurch gekennzeichnet, dass** die Schalteinrichtung (2) zumindest zwei Schaltpositionen aufweist, wobei die Schalteinrichtung mittels elektrischer Signale in ihrer Schaltposition veränderbar ist und im stromlosen Zustand in der jeweiligen Schaltposition fixiert ist.

3. Verriegelungsvorrichtung nach Anspruch 1, **dadurch gekennzeichnet, dass** die elektrische Spule (5, 6) über ein magnetisch wirksames Element (7) elektromagnetisch an den Permanentmagneten (8, 9) gekoppelt ist.

4. Verriegelungsvorrichtung nach einem der vorhergehenden Ansprüche, **dadurch gekennzeichnet, dass** die Schalteinrichtung (2) eine mechanische Rastvorrichtung (10) zur Arretierung der jeweiligen Schaltposition aufweist.

5. Verriegelungsvorrichtung nach Anspruch 4, **dadurch gekennzeichnet, dass** die Rastvorrichtung (10) ein Federelement (11) aufweist.

## Claims

1. Locking device for an electromechanically operable wheel brake of a motor vehicle, which wheel brake is adapted to be locked in an applied state by means of the locking device, including an electrically actuatable switching device (2) and a detent pawl (3), which is coupled electromagnetically to the switching device (2) by at least one electric coil (5, 6) with an electromagnetically active coil core (7), and cooperates with at least one element (4) for transmitting the actuating force of the wheel brake,
**characterized in that** the switching device (2) includes at least one permanent magnet (8, 9) that cooperates with the detent pawl (3), and the electric coil (5, 6) is arranged close to the permanent magnet (8, 9) in such a fashion that, depending on the energization of the coil (5, 6), the magnetic field of the permanent magnet (8, 9) is strengthened or weakened.

2. Locking device as claimed in claim 1,
**characterized in that** the switching device (2) includes at least two switching positions, and the switching device is variable in its switching position by means of electric signals and is fixed in the respective switching position in the de-energized state.

3. Locking device as claimed in claim 1,
characteri zed in that the electric coil (5, 6) is electromagnetically coupled to the permanent magnet (8, 9) by way of a magnetically active element (7).

4. Locking device as claimed in any one of the preceding claims,
**characterized in that** the switching device (2) includes a mechanic snap-in arrangement (10) for fixing the respective switching position.

5. Locking device as claimed in claim 4,
**characterized in that** the snap-in arrangement (10) includes a spring element (11).

## Revendications

1. Dispositif de verrouillage pour un frein de roue à actionnement électromécanique d'un véhicule automobile, qui peut être bloqué, au moyen du dispositif de verrouillage, dans un état serré, comportant un dispositif de commutation (2) à commande électrique ainsi qu'un cliquet de blocage (3) qui est couplé électromagnétiquement au dispositif de commutation (2) par au moins une bobine électrique (5, 6) dont le noyau (7) a une action électromagnétique, et coopère avec au moins un élément (4) pour la transmission de la force d'actionnement du frein de roue, **caractérisé en ce que** le dispositif de commutation (2) comporte au moins un aimant permanent (8, 9) qui coopère avec le cliquet de blocage (3), la bobine électrique (5, 6) étant disposée à proximité de l'aimant permanent (8, 9) de manière que suivant le courant qui traverse la bobine (5, 6), le champ magnétique de l'aimant permanent (8, 9) est intensifié ou affaibli.

2. Dispositif de verrouillage selon la revendication 1, **caractérisé en ce que** le dispositif de commutation (2) présente au moins deux positions de commutation, le dispositif de commutation changeant de position au moyen de signaux électriques et étant fixé dans la position de commutation correspondante, à l'état non parcouru par un courant.

3. Dispositif de verrouillage selon la revendication 1, **caractérisé en ce que** la bobine électrique (5, 6) est couplée électromagnétiquement aux aimants permanents (8, 9) par un élément (7) à action magnétique.

4. Dispositif de verrouillage selon l'une des revendications précédentes, **caractérisé en ce que** le dispositif de commutation (2) comporte un dispositif d'encliquetage mécanique (10) pour bloquer la position de commutation respective.

5. Dispositif de verrouillage selon la revendication 4, **caractérisé en ce que** le dispositif d'encliquetage (10) comporte un élément à ressort (11).
